# EUROPEAN PATENT APPLICATION

(11) **EP 2 455 784 A1**
(43) Date of publication of application: **23.05.2012**
(21) Application number: 11188924.2
(22) Date of filing: 14.11.2011
(51) Int. Cl.: G02B 5/04, G02B 5/20, G02B 27/14, G02F 1/13357, G02B 6/00

(54) **Transparent lateral-light-source structure and plate body thereof**

(30) Priority: 18.11.2010 TW 099139701
(71) Applicant: Era Optoelectronics Inc., New Taipei City 231 (TW)
(72) Inventor: Lin, Chih-Hsiung, 231 New Taipei City (TW); Chang, Shih-Yuan, 302 Zhubei City (TW)
(74) Representative: Viering, Jentschura & Partner

(57) **Abstract**

A transparent lateral-light-source structure comprises an invisible light source; and a plate body, comprising a transparent plate, having a rear end face being disposed with a plurality of convex-concave structures; a coating layer, capable of reflecting invisible light, allowing visible light to pass through, and one end face of the coating layer being coupled to the rear end face; and a transparent material layer, coupled to another end face of the coating layer, and the transparent material layer filling and leveling up the plurality of convex-concave structures; wherein, when invisible light emitted from the invisible light source is projected into the transparent plate, the incident invisible light is reflected by the plurality of convex-concave structures and the coating layer, and further projected out of a front end of the transparent plate, and visible light can pass through the plate body.

## Description

### BACKGROUND OF THE INVENTION

### 1. Field of the Invention

The present invention relates to a light source structure of a backlight plate, and more particularly to a lateral light source structure which is transparent to visible light and a plate body thereof.

### 2. Description of Related Art

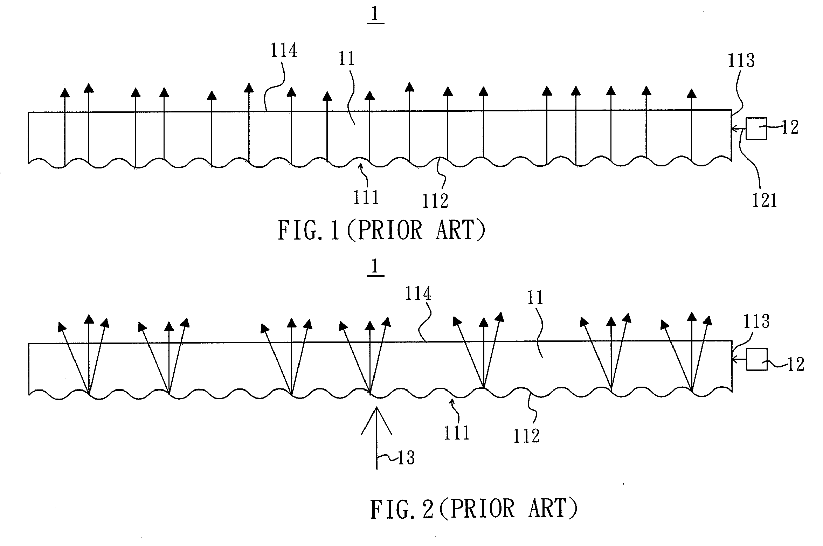

A conventional backlight plate 1, as FIG. 1 shows, includes a regular or irregular microstructures 112 embossed on a rear end face 111 of a plate 11; when light 121 emitted from a light source 12 is projected in the plate 11 through a lateral end face 113 of the plate 11, and then on the microstructures 112, it will be scattered out of a front endface 114 of the plate 11, thereby forming uniform emergent light.

Furthermore, the conventional backlight plate 1, as FIG. 2 shows, is used for obtaining a uniform planar light source without needing to consider the problem of the transmission of light 13 through the plate 11 such that it is an opaque structure; a viewer in front of the backlight plate 1 cannot see the images behind the back light plate 1 because the microstructures 112 on a rear end face 111 causes the transmission visible light to be scattered.

Taiwan Patent No. 1330804 discloses an invention relates to a remote controlled positioning system, a control system and a display device thereof. The remote controlled positioning system includes a liquid crystal display (LCD) panel, a back light source, a plurality of infrared ray (IR) sources and a directional remote controller. The LCD panel includes a plurality of display areas. The plurality of IR sources are disposed below the rear area of the LCD panel, wherein the IR sources is disposed correspondingly to the position of the display areas to respectively emit infrared rays to pass through the LCD panel. The directional remote control receives the infrared rays emitted from the infrared ray sources to obtain positional information pointed to a position of the LCD panel by the directional remote control.

The plurality of IR sources of the patent mentioned above are disposed below the rear area of the LCD panel, and the IR sources are respectively disposed correspondingly to the position of each display area and not disposed at a side end face of the backlight plate such that the IR cannot be transmitted uniformly out of the front end face of the backlight plate.

### SUMMARY OF THE INVENTION

To allow visible light to pass through microstructures, and a backlight plate with an invisible light source to have a function of transparency, the present invention is proposed.

The main object of the present invention is to provide a transparent lateral-light-source structure and a plate body thereof, disposed with convex-concave microstructures on a rear end face of a plate body which is spread with a coating layer on the rear end face thereof; the coating layer can reflect invisible light but allow visible light to pass through; one end of the coating layer not contacting with the rear end face of the plate body is spread with a transparent material layer, allowing the transparent mater layer to fill and level up the convex-concave microstructures, thereby allowing incident invisible light from an invisible light source via a lateral end face of the plate to be scattered out of a front end face of the plate body uniformly, and visible light to pass through the plate body.

Another object of the present invention is to provide a transparent lateral-light-source structure and a plate body thereof, having a simple structure capable of upgrading the practical functions of a backlight plate.

### BRIEF DESCRIPTION OF THE DRAWINGS

The present invention can be more fully understood by reference to the following description and accompanying drawings, in which:
FIG. 1 is a schematic view of a conventional backlight plate;
FIG. 2 is a schematic view of the scattering of visible light caused by a conventional backlight plate while passing through it; and
FIG. 3 is a schematic view of a transparent lateral-light-source structure according to the present invention.

### DETAILED DESCRIPTION OF THE PREFERRED EMBODIMENTS

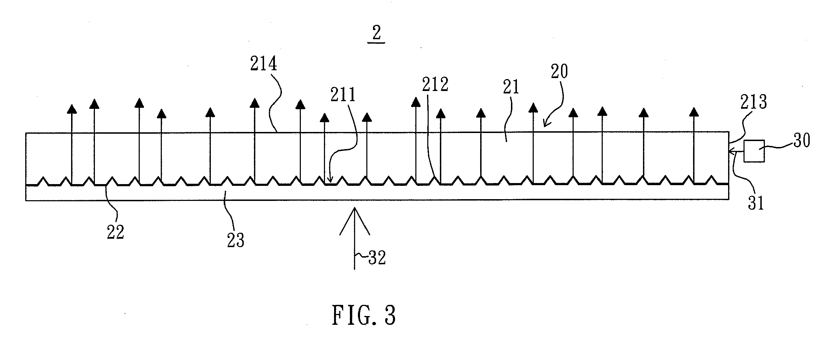

A transparent lateral-light-source structure 2, as FIG. 3 shows, includes a plate body 20 and an invisible light source 30 from which invisible light is emitted, where the plate body 20 includes a transparent plate 21, a coating layer 22 and a transparent material layer 23. The transparent plate 21 has a rear end face 211, a lateral end face 213 and a front end face 214. The material of the coating layer 22 is a general coating material which can reflect invisible light but allows visible light to pass through it. One end face of the coating layer 22 is coupled to the rear end face 211, inclusively coupled to the convex-concave microstructures 212. Furthermore, another end face of the coating layer 22 is coupled to the transparent material layer 23, where the coating layer 22 may be coupled to the rear end face 211 by means of coating and the transparent material layer 23 may be coupled to the coating layer 22 by means of spreading. The transparent material layer 23 fills and levels up the convex-concave structures 212, thereby decreasing the refraction angle of light 32 while it passes through the coating layer 22, and allowing the rear end face 211 of the transparent plate 21 to form flatly. The transparent plate 21 may be a planar transparent acrylic plate or transparent glass plate, and the convex-concave structure may be prismatic, pyramidical, conic or the same, having a reflecting faces facing the invisible light source 30, which may reflect the invisible light 31 emitted from the invisible light source 30 to the front end face 214 of the transparent plate 21 and is then out of the front end face 214 of the transparent plate 21 to forma invisible-light planar light source.

The material of the transparent material layer 23 may be a transparent resin having a refractive index close approximately to the material of the transparent plate 21, such as UV curable resin, silica gel, or the same; the difference of refractive index between it and the transparent plate 21 is smaller than 0.5, for example, if the refractive index of the transparent plate 21 is 0.1 larger or smaller than the refractive index of the transparent material layer 23, the refraction angle can be further decreased while the light 32 passes through the coating layer 22.

When the transparent lateral-light-source structure 2 of the present invention allows the invisible light 31 such as infrared light or ultraviolet light emitted from the invisible light source 30 to be projected in the transparent plate 21 via the lateral end face 213 thereof, it can be reflected by the plurality of convex-concave structures 212 and the coating layer 22 to change the moving direction thereof and further to projected out of the front end face 214 of the transparent plate 21. In the meantime, the visible light 32 can pass through the plate body 20 such that an viewer positioning in front of the front end face 214 can see the images behind the plate body 20 clearly without being influenced by the convex-concave structures 214 and the coating layer 22; the viewer almost cannot see the convex-concave structures 212 and the coating layer 22.

The transparent lateral-light-source structure and a plate thereof has a simple structure. Incident invisible light projected via the lateral end face of the plate body can be scattered out of the front end face of the plate uniformly, and visible light can pass through the plate body such that a viewer positioning in front of the plate body can see the images behind the plate body, thereby allowing a backlight plate with an invisible light source to function transparent and upgrading the practical use of the backlight plate.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A plate body (20), comprising:
a transparent plate (21), having a rear end face (211),
a lateral end face (213) and a front end face (214), said rear end face (211) being disposed with a plurality of convex-concave structures (212);
a coating layer (22), capable of reflecting invisible light (31), allowing visible light (32) to pass through,
and one end face of said coating layer (22) being coupled to said rear end face (211); and
a transparent material layer (23), coupled to another end face of said coating layer (22), and said transparent material layer (23) filling and leveling up said plurality of convex-concave structures (212);
wherein, when invisible light (31) emitted from an invisible light source (30) is projected into said transparent plate (21) via said lateral end face (213) thereof, said incident invisible light (31) is reflected by said plurality of convex-concave structures (212) and
said coating layer (22), causing the moving direction thereof to be changed, and further projected out of said front end (214) of said transparent plate (21), and visible light (32) can pass through said plate body (20).

2. The plate body (20) according to claim 1, wherein the difference of a refractive index between said transparent material layer (23) and said transparent plate (21) is smaller than 0.5.

3. The plate body (20) according to claim 2, wherein said transparent plate (21) is planar, the material of said transparent material layer (23) is selected from one of transparent resin and transparent silica gel.

4. The plate body (20) according to claim 1, 2 or 3, wherein said convex-concave structure (212) is prismatic, pyramidical or conic.

5. The plate body (20) according to claim 4, wherein said transparent plate (21) is a transparent acrylic plate or transparent glass plate; the material of said transparent material layer (23) is ultraviolet curable resin.

6. The plate body (20) according to claim 5, wherein said coating layer (22) is coupled to said rear end face (211) by means of coating; and said transparent material layer (23) is coupled to said coating layer (22) by means of spreading.

7. The plate body (20) according to claim 6, wherein said invisible light source (30) is infrared-light light source.
